# EUROPÄISCHE PATENTANMELDUNG

(11) **EP 3 584 748 A1**
(43) Veröffentlichungstag der Anmeldung: **25.12.2019**
(21) Anmeldenummer: 18178772.2
(22) Anmeldetag: 20.06.2018
(51) Int. Cl.: G06N 3/04, G06N 3/08

(54) **VERFAHREN ZUR ERZEUGUNG EINES TESTDATENSATZES, VERFAHREN ZUM TESTEN, VERFAHREN ZUM BETREIBEN EINES SYSTEMS, VORRICHTUNG, STEUERUNGSSYSTEM, COMPUTERPROGRAMMPRODUKT, COMPUTERLESBARES MEDIUM, ERZEUGUNG UND VERWENDUNG**

(71) Anmelder: Siemens Aktiengesellschaft, 80333 München (DE)
(72) Erfinder: Botero Halblaub, Andrés, 85614 Kirchseeon (DE); Götz, Jan, 91054 Buckenhof (DE)

(57) **Zusammenfassung**

Die Erfindung betrifft ein Verfahren zur Erzeugung eines Testdatensatzes (12) für einen Algorithmus (1), umfassend folgende Schritte:
1.1 Eine angelernte künstliche Intelligenz(8) wird bereitgestellt,
1.2 die künstliche Intelligenz (8) wird insbesondere unter Verwendung eines Zufallssignals (11) und/oder unter Verwendung einer quasi Linearitätseigenschaft für visuelle Konzepte angeregt, und
1.3 die künstliche Intelligenz (8) erzeugt wenigstens einen Testdatensatz (14), der Bilddaten (15) und zu den Bilddaten (1g) gehörigen Handlungsbereiche (16) und/oder Sensordaten und zu den Sensordaten gehörige Handlungsbereiche umfasst.

Darüber hinaus betrifft die Erfindung ein Verfahren zum Betreiben eines Systems zur automatisierten, bildabhängigen Steuerung einer Einrichtung und eine Vorrichtung zur Durchführung der vorgenannten Verfahren. Schließlich betrifft die Erfindung ein Steuerungssystem für eine Einrichtung, welches eine solche Vorrichtung umfasst, sowie ein Computerprogrammprodukt, ein computerlesbares Medium, die Erzeugung eines Datenträgers und die Verwendung einer künstlichen Intelligenz (8) .

## Beschreibung

Verfahren zur Erzeugung eines Testdatensatzes, Verfahren zum Testen, Verfahren zum Betreiben eines Systems, Vorrichtung, Steuerungssystem, Computerprogrammprodukt, computerlesbares Medium, Erzeugung und Verwendung

Die Erfindung betrifft ein Verfahren zur Erzeugung eines Testdatensatzes für einen Algorithmus, sowie ein Verfahren zum Testen eines solchen. Darüber hinaus betrifft die Erfindung ein Verfahren zum Betreiben eines Systems zur automatisierten, bildabhängigen Steuerung einer Einrichtung und eine Vorrichtung zur Durchführung der vorgenannten Verfahren. Schließlich betrifft die Erfindung ein Steuerungssystem für eine Einrichtung, welches eine solche Vorrichtung umfasst, ein Computerprogrammprodukt, ein computerlesbares Medium, die Erzeugung eines Datenträgers und die Verwendung einer künstlichen Intelligenz.

Im Bereich der Entwicklung von Steuerungssoftware stellt das Testen von Software einen beachtlichen Teil des Entwicklungsaufwandes dar. Dies ist u.a. dem Umstand geschuldet, dass das Design von Qualitätstests komplex und die Fehlerdetektion schwierig und nicht trivial ist. Insbesondere gilt, dass je komplexer ein zu testender Algorithmus ist, umso komplexer auch die Tests für diesen sind. Vor allem ist es auch schwer "umfassend" zu testen, also eine geforderte Testabdeckung zu erreichen.

Algorithmen zur Bildverarbeitung gehören mit zu den komplexesten Algorithmen in Computersystemen. Der Anmelderin ist bekannt, dass beispielsweise Algorithmen, die im Bereich der fortgeschrittenen Fahrerassistenz (engl. Advanced Driver Assistance, ADAS) oder der autonomen Fahrzeugführung zum Einsatz kommen, einer menschlichen Überprüfung mittels Testszenarien, die auf aufgezeichneten Testdatensätzen beruhen, unterzogen werden, oder "Real-Life-Tests" auf Testgeländen oder in der realen Umgebung stattfinden.

Eine Überprüfung kann gegen vordefinierte "Best-Case-Actions" in realen Videosequenzen stattfinden, die zuvor aufgezeichnet und mit einem hohen Maß an menschlichen Interventionen erzeugt wurden. Jeder neue Testfall wird manuell erzeugt und lässt keinen Raum für Zufälligkeit im Testszenario.

Die bekannten Ansätze haben gemeinsam, dass sich sowohl die Testdaten als auch ein erwartetes Verhalten durch eine enge Interaktion mit einem menschlichen Akteur auszeichnen und mit einer schwierigen Integration in einen automatisierten Test-Setup einhergehen. Eine Erweiterung der Tests stellt sich komplex und schwierig dar.

Der Anmelderin ist weiterhin bekannt, dass bei einigen Herstellern die Testphase sogar auf einen sich an die Auslieferung des Produktes anschließenden Zeitraum ausgedehnt wird und während überwachter autonomer Fahrvorgänge Testdaten gesammelt werden, um die Algorithmen basierend auf diesen zu verbessern.

Ausgehend hiervon ist es eine Aufgabe der vorliegenden Erfindung, verbesserte Möglichkeiten zum Testen von komplexen, bildverarbeitenden Algorithmen bereitzustellen.

Diese Aufgabe wird gelöst durch ein Verfahren zur Erzeugung wenigstens eines Testdatensatzes für einen Algorithmus, der als Input Bilddaten erhält und als Output von den Bilddaten abhängige Handlungsbereiche, die insbesondere zulässige Steuerparameter repräsentieren, ausgibt, und/oder der als Input Sensordaten erhält und als Output von den Sensordaten abhängige Handlungsbereiche, die insbesondere zulässige Steuerparameter repräsentieren, ausgibt, umfassend folgende Schritte:
1.1 Eine angelernte künstliche Intelligenz, die insbesondere generative adversariale Netze umfasst oder durch solche gegeben ist, wird bereitgestellt,
1.2 die künstliche Intelligenz wird insbesondere unter Verwendung eines Zufallssignals und/oder unter Verwendung einer quasi Linearitätseigenschaft für visuelle Konzepte angeregt, und
1.3 die angeregte künstliche Intelligenz erzeugt wenigstens einen Testdatensatz, der Bilddaten und zu den Bilddaten gehörige Handlungsbereiche und/oder Sensordaten und zu den Sensordaten gehörige Handlungsbereiche umfasst.

In Schritt 1.1 wird bevorzugt eine künstliche Intelligenz bereitgestellt, die lange Kurzzeitgedächtnis Netze umfasst oder durch solche gegeben ist. Weiterhin bevorzugt wird in Schritt 1.1 eine künstliche Intelligenz bereitgestellt, die wenigstens ein generatives Netz und/oder wenigstens ein diskriminierendes Netz umfasst oder durch solche gegeben ist. Dann wird besonders bevorzugt in Schritt 1.2 wenigstens ein generatives Netz der künstlichen Intelligenz angeregt und es gibt bevorzugt in Schritt 1.3 wenigstens ein angeregtes generatives Netz der künstlichen Intelligenz einen Testdatensatz aus. Bei den generativen adversarialen Netzen, insbesondere dem wenigsten einen generativen und/oder dem wenigstens einen diskriminierenden Netz handelt es sich zweckmäßiger Weise um künstliche neuronale Netze.

Es sei angemerkt, dass alternativ zu dem Ausdruck Netz prinzipiell auch die Begriffe System oder Modell oder Netzwerk synonym verwendet werden können.

Besonders bevorzugt werden zum Erhalt der in Schritt 1.1 bereitgestellten angelernten künstlichen Intelligenz folgende Schritte durchgeführt:
2.1 Ein Lerndatensatz, welcher reale, mittels wenigstens einer Bilderfassungseinrichtung aufgezeichnete Bilddaten, und zu den realen Bilddaten gehörige Handlungsbereiche und/oder reale, mittels wenigstens einer Sensoreinrichtung aufgezeichnete Sensordaten, und zu den realen Sensordaten gehörige Handlungsbereiche umfasst, wird bereitgestellt,
2.2 eine künstliche Intelligenz, die insbesondere generative adversariale Netze umfasst oder durch solche gegeben ist, wird bereitgestellt, und
2.3 die künstliche Intelligenz wird unter Verwendung des bereitgestellten Lerndatensatzes konditioniert.

Die vorliegende Erfindung basiert auf der Überlegung, eine künstliche Intelligenz einzusetzen, um aus einem initialen Datensatz Bilddaten und/oder Sensordaten und zugehörige Handlungsbereiche zu generieren, mit denen Algorithmen insbesondere aus dem Bereich der Bild-, insbesondere Bildsequenzen- bzw. Sensorwert-abhängigen Steuerung auf ihre Performanz bzw. ihr Verhalten überprüft werden können. Dabei wird erfindungsgemäß eine künstliche Intelligenz herangezogen, die unter Verwendung eines Lerndatensatzes, der insbesondere durch Beobachtung bzw. Aufzeichnung realer Situationen und durch menschliche Interaktion erhalte wurde, konditioniert, also angelernt wird, und dann bereitsteht, um Testdaten zu erzeugen. Die mittels der angelernten künstlichen Intelligenz erzeugten Datensätze stellen "synthetisch" erhaltene Testdaten dar, welche in ihrer Art und Geeignetheit insbesondere dem bereitgestellten Lerndatensatz gleichen und realitätsnah bzw. von realen Daten nicht zu unterscheiden sind. Künstliche Intelligenzmethoden werden insbesondere zur Erzeugung von Bildersequenzen und den dazu passenden Aktionen bevorzugt durch generative adversariale Netze genutzt.

Erfindungsgemäß werden insbesondere hochdimensionale Daten, etwa in Form von Bildsequenzen und niedrigdimensionale Daten in Form von Handlungsbereichen bzw. Handlungskorridoren (engl.: action corridors), die insbesondere zulässige Steuerparameter repräsentieren,) verarbeitet, um einen Test-Fall-Generator zu trainieren, um die Performanz bzw. das Verhalten eines insbesondere bild- bzw. sensorwertabhängig steuernden Algorithmus zu klassifizieren. Die Konditionierung basiert bevorzugt auf Bild- und/oder Sensordaten, die um Handlungsbereiche als vektorielle Zahlenreihe ergänzt sind. Die Handlungsbereiche repräsentieren insbesondere Steuerparameter, die in Abhängigkeit der Bild- bzw. Sensordaten, zu welchen diese jeweils gehören, zulässig sind, bevorzugt eine Sammlung von Steuerparametern bzw. -werten, die, wenn sie ausgeführt werden, dazu führen, dass man sich, insbesondere mit einer Einrichtung, etwa einem Fahrzeug oder Roboter, die über den Algorithmus gesteuert wird, in dem (zulässigen) Handlungsbereich bewegt.

Durch Ergänzen der Bild- und/oder Sensordaten um die Handlungsbereiche wird ein annotierten Datensatz mit den Testinformationen, die zur Erzeugung von weiteren Testszenarios nötig sind, erhalten. Es erfolgt bevorzugt eine Konditionierung der einzelnen Netze, insbesondere des generativen und adversarialen, bevorzugt diskriminierenden Netzes, durch abwechselndes Generieren durch ein generatives Netz und Überprüfen (adversarial) der Generate, also künstlichen Bild- und/oder Sensordaten und zugehörigen Handlungsbereiche durch ein adversariales, insbesondere diskriminierendes Netz.

Das der Erfindung zugrundeliegende Schema der Testdatengenerierung basiert dabei bevorzugt auf der Arbeit von Ian Goodfellow et al., die in dem Aufsatz "Generative Adversarial Nets" (GANs) , ArXiv: 1406.2661 [statML]661v1, 10. Januar 2014 veröffentlicht wurde, sowie der Arbeit von Alec Redfort et al. aus dem Aufsatz "Unsupervised Representation Learning With Deep Convolutional Generative Adversarial Networks", ArXiv: 1511.06434V2 [cs.LG], 7. Januar 2016, und insbesondere von Sepp Hochreiter und Jürgen Schmidhuber aus dem Aufsatz "Long Short Term Memory" (LSTM) Neural Computation 9 (8): 1735 - 1780, 1997.

Insbesondere ein GAN-Ansatz wird genutzt, um Datensätze aus einer künstlichen Intelligenzanwendung bevorzugt auf Anregung durch ein Zufallssignal (engl.: random signal) oder Verwendung der quasi Linearitäts-Eigenschaft für visuelle Konzepte, wie sie in der vorgenannten Publikation "Unsupervised Representation Learning With Deep Convolutional Generative Adversarial Networks von Alec Redford et al. aus dem Jahre 2016, insbesondere der FIG 7 auf Seite 10 dieser Publikation, hervorgeht, zu generieren. Das generative Netz bzw. der generative Algorithmus wird dabei invers zu dem üblichen Ansatz genutzt, das bedeutet, statt dem generativen Netz bzw. Algorithmus zu erlauben, dass es Muster erkennt und diese klassifiziert, ist der Prozess herumgedreht und durch "Klassifizierungs-Input" eines Zufallssignals wird das System angeregt und ein neues "Muster" (engl. Pattern) wird generiert. Goodfellow und Redford zeigen in ihren Arbeiten aus den Jahren 2014 und 2016, dass die Erzeugung neuer Bilder beinahe eine lineare Operation im Vektorraum wird. Das bedeutet, der Algorithmus kann leichter getuned werden, um neue Sequenzen zu generieren.

Das bzw. die antrainierten Netz(e), System(e) bzw. Modell(e) können zur Erzeugung neuer Daten herangezogen werden. Durch Anregung insbesondere eines generativen Netzes der künstlichen Intelligenz werden neue Bild- und/oder Sensordaten sowie zugehörige Handlungsbereiche mit den angelernten Regeln erzeugt. Insbesondere durch die Eigenschaften eines GANs können Generate durch einfache arithmetische Operationen beeinflusst werden. Zum Beispiel kann erhalten werden: Allee - Bäume = einfache Straße oder auch geraden Straße + Kurve = Schikane.

Besonders bevorzugt werden anstelle von klassischen convolutional Netzen LSTM-Netze, insbesondere convolutional LSTM Netze, sowohl für das oder die generierenden Netz(e) als auch für das oder die adversarialen Netz(e) benutzt. Die Vorteile der Verwendung von LSTM Netzen liegen vor allem darin, dass zeitabhängige Sequenzen (von Bild- bzw. Sensordaten und zugehörigen Handlungsbereichen) erhalten werden und durch LSTM Rauscheffekte (nicht physikalische Artefakte) vermieden werden. Unter einem LSTM-Netz ist insbesondere ein Netz zu verstehen, mit dem man vergangene Zustände berücksichtigt. LSTM ist eine Spezialisierung dieser Art von Netzen. So kann die Zeitabhängigkeit mitmodelliert werden, die insbesondere Bildsequenzen und Handlungsbereiche bzw. -korridore brauchen. LSTM-Netze, die im Rahmen der vorliegenden Erfindung zum Einsatz kommen können, sind beispielsweise in dem Aufsatz "Long Short Term Memory" (LSTM) Neural Computation 9 (8): 1735 - 1780, 1997 von Sepp Hochreiter und Jürgen Schmidhuber beschrieben.

Der Ansatz wird erweitert und erlaubt convolutional LSTM Netzen wiederkehrende vorangegangene Zustände zeitnah einzufangen, um die künstliche Intelligenz, die insbesondere ein GAN-System umfasst oder durch ein solches gegeben ist, zu trainieren, d.h. Bilddaten, insbesondere Bildsequenzen, und/oder Sensordaten, und zugehörige Handlungsbereiche zu erhalten. Dies erlaubt es, das dynamische Verhalten von Testszenen zu modellieren.

Die erfindungsgemäße Vorgehensweise bietet diverse Vorteile. Einerseits kann der Umfang der menschlichen Interaktion bzw. menschlicher Eingriffe bei dem Testen komplexer Algorithmen deutlich reduziert werden. Da es problemlos möglich ist, eine auch sehr große Anzahl von Testdaten bereitzustellen, kann die Testabdeckung (engl.: test coverage) komplexer Algorithmen deutlich erhöht werden.

Da besonders umfangreich und tiefgehend getestet werden kann, können besonders zuverlässig arbeitende Algorithmen erhalten werden, was für den Bereich der bildgestützten Steuerung, wie sie u.a. im Rahmen der fortgeschrittenen Fahrassistenz bzw. des autonomen Fahrens erfolgt, einen erheblichen Vorteil darstellt bzw. zwingend erforderlich ist. Die Qualität und Zuverlässigkeit derartiger Systeme kann im Ergebnis deutlich erhöht werden und dies mit sehr überschaubarem Aufwand. Ein weiterer Vorteil besteht darin, dass die Erzeugung von Test-Harnischen und Test-Vektoren erfindungsgemäß in nur einem Vorverarbeitungs-Schritt erfolgt.

In bevorzugter Ausführungsform wird wenigstens ein Testdatensatz für einen Algorithmus erzeug, der als Input eine Bildsequenz erhält und als Output von der Bildsequenz abhängige Handlungsbereiche ausgibt, insbesondere für einen Algorithmus eines Systems zur autonomen Fahrzeugführung oder eines bevorzugt fortgeschrittenen Fahrerassistenzsystems, wobei insbesondere in Schritt 2.1 ein Lerndatensatz bereitgestellt wird, welcher eine reale Bildsequenz, die mittels wenigstens einer Bilderfassungseinrichtung aufgezeichnet wurde, und zu den Bildern der Sequenz gehörige Handlungsbereiche, die insbesondere zulässige Steuerparameter für ein System zur automatisierten, bildgestützten Steuerung einer Einrichtung repräsentieren, bereitgestellt wird, und in Schritt 1.3 die angeregte künstliche Intelligenz, insbesondere wenigstens ein generatives Netz dieser, wenigstens einen Testdatensatz erzeugt, der eine neue Bildsequenz und zu der neuen Bildsequenz gehörigen Handlungsbereiche umfasst.

Es sei angemerkt, dass sich die erfindungsgemäße Vorgehensweise insbesondere für den Bereich der fortgeschrittenen Fahrassistenz sowie des autonomen Fahrens eignet, da es in diesen Bereichen erforderlich ist, dass in Abhängigkeit von Bildsequenzen, etwa Videos Steuerbefehle ausgegebene werden, sich diese jedoch keineswegs auf diese beiden Beispiele beschränkt. Vielmehr können Testdatensätze auch für Algorithmen aus anderen Bereichen erzeugt werden, etwa für solche, die im Rahmen einer bildgestützten, automatisierten Robotersteuerung oder automatisierten Sortierprozessen, beispielsweise an einem Fließband, verwendet werden. Auch Algorithmen für eine nicht bildgestützte, sondern auf Sensordaten beruhende Steuerung können erfindungsgemäß getestet werden.

Erfindungsgemäß werden bevorzugt originale, reale Bilddaten, insbesondere Bildsequenzen, und/oder Sensordaten und zugehörige Handlungsbereiche als Lerndatensatz verwendet, um eine künstliche Intelligenz, insbesondere ein GAN-System, zu konditionieren.

Dementsprechend ist bevorzugt zunächst wenigstens ein Bilddatensatz, insbesondere eine Bildsequenz, und/oder wenigstens ein Sensordatensatz zu erfassen, was mittels hinlänglich bekannter Bilderfassungseinrichtungen, etwa einer oder mehreren Kamera(s), bzw. Sensoreinrichtungen erfolgen kann. Es kann beispielsweise eine Kamera herangezogen werden, die in einem Fahrzeug oder an einem Roboter vorgesehen ist und aufzeichnet, während das Fahrzeug fährt bzw. der Roboter arbeitet. Die erhaltene Bildsequenz bzw. das erhaltene Video stellt dann insbesondere einen Testvektor dar. Die zu den realen Bild- bzw. Sensordaten gehörigen Handlungsbereiche werden ermittelt und die Bild- bzw. Sensordaten und Handlungsbereiche werden einander zugeordnet und der Testdatensatz wird erhalten. Alternativ dazu, dass ein realer Testdatensatz zunächst auf diese Weise erstellt wird, kann auch auf einen vorhandenen Testdatensatz zugegriffen werden, soweit ein geeigneter verfügbar ist.

In einem nächsten Schritt wird die künstliche Intelligenz, insbesondere ein generatives Netz dieser, bevorzugt mit den realen Testdaten trainiert und kann anschließend beispielsweise mit einem oder mehrere Zufallssignalen angeregt werden, um neue Bilddaten, insbesondere Bildsequenzen, und/oder Sensordaten und zugehörige Handlungsbereiche zu generieren.

Diese neu erhaltenen, synthetischen Testdaten können dann einem zu testenden Algorithmus - ggf. zusätzlich zu dem Lerndatensatz - zugeführt werden, um diesen zu überprüfen.

Insbesondere für den Fall, dass wenigstens ein Testdatensatz für einen Algorithmus eines fortgeschrittenen Fahrerassistenzsystems oder für ein System zur autonomen Fahrzeugführung erzeugt wird, ist in weiterer bevorzugter Ausgestaltung vorgesehen, dass ein zum Anlernen der künstlichen Intelligenz bereitgestellter Lerndatensatz eine Bildsequenz umfasst, die Bilder von Fahrsituationen umfasst, und/oder die für jedes Bild als zugehörigen Handlungsbereich eine Fahrtrajektorie und insbesondere einen zu der jeweiligen Fahrtrajektorie gehörigen Sollkorridor, der einen Sollbereich um die Fahrtrajektorie definiert, umfasst.

In Weiterbildung wird ferner in Schritt 1.3 wenigstens ein Testdatensatz erzeugt, der eine Bildsequenz umfasst, die Bilder von Fahrsituationen umfasst, und/oder die für jedes Bild als zugehörigen Handlungsbereich eine Fahrtrajektorie und insbesondere einen zu der jeweiligen Fahrtrajektorie gehörigen Sollkorridor, der einen Sollbereich um die Fahrtrajektorie definiert, umfasst.

Ein weiterer Gegenstand der vorliegenden Erfindung ist ein Verfahren zum Testen eines Algorithmus, umfassend die Schritte:
9.1 ein zu testender Algorithmus, der als Input Bilddaten erhält und als Output von den Bilddaten abhängige Handlungsbereiche ausgibt und/oder der als Input Sensordaten erhält und als Output von den Sensordaten abhängige Handlungsbereiche ausgibt, insbesondere ein Algorithmus eines fortgeschrittenen Fahrerassistenzsystems oder für ein System zur autonomen Fahrzeugführung, wird bereitgestellt,
9.2 das Verfahren nach einem der vorherigen Ansprüche wird durchgeführt, um wenigstens einen Testdatensatz mit Bilddaten und zu den Bilddaten gehörigen Handlungsbereichen und/oder mit Sensordaten und zu den Sensordaten gehörigen Handlungsbereichen zu erhalten,
9.3 der wenigstens eine Testdatensatz wird bereitgestellt,
9.4 die Bilddaten und/oder die Sensordaten des wenigstens einen Testdatensatzes werden dem zu testenden Algorithmus als Input zugeführt,
9.5 der Algorithmus wird ausgeführt und gibt als Output Handlungsbereiche aus,
9.6 die von dem Algorithmus als Output ausgegebenen Handlungsbereiche werden mit den Handlungsbereichen des wenigstens einen Testdatensatzes verglichen,
9.7 aus dem Ergebnis des Vergleichs wird auf eine Qualität des getesteten Algorithmus (geschlossen.

Eine Ausführungsform des erfindungsgemäßen Verfahrens zum Testen eines Algorithmus zeichnet sich dadurch aus, dass im Anschluss an die Durchführung der Schritte 9.1 bis 9.7 die Schritte 1.2 und 1.3 des erfindungsgemäßen Verfahrens zur Erzeugung eines Testdatensatzes erneut durchgeführt werden, um wenigstens einen weiteren Testdatensatz zu erzeugen, der von dem zuvor erzeugten Testdatensatz verschieden ist, und der wenigstens eine weitere Testdatensatz bereitgestellt und die Schritte 9.4 bis 9.7 wiederholt werden, insbesondere, um weitere Aspekte des Algorithmus zu testen.

Diese Vorgehensweise hat sich als besonders vorteilhaft erwiesen. Durch eine Wiederholung oder auch mehrere Wiederholungen der generativen Schritte wird es insbesondere möglich, immer wieder neue und weitere Aspekte eines zu testenden Algorithmus zu überprüfen.

Noch ein weiterer Gegenstand der vorliegenden Erfindung ist ein Verfahren zum Betreiben eines Systems zur automatisierten, insbesondere bild- und/oder sensorabhängigen Steuerung einer Einrichtung, insbesondere eines Fahrzeugs oder Roboters, wobei das System wenigstens eine Bilderfassungseinrichtung, insbesondere Kamera, und/oder wenigstens eine Sensoreinrichtung, sowie eine Auswerte- und Steuereinheit und Mittel zur Steuerung der Einrichtung umfasst, wobei in der Steuer- und Auswerteeinheit ein Algorithmus abgelegt oder abzulegen ist, der als Input Bilddaten erhält und als Output von den Bilddaten abhängige Handlungsbereiche, die insbesondere zulässige Steuerparameter repräsentieren, ausgibt, und/oder der als Input Sensordaten erhält und als Output von den Sensordaten abhängige Handlungsbereiche, die insbesondere zulässige Steuerparameter repräsentieren, ausgibt, bei dem der Algorithmus unter Durchführung des erfindungsgemäßen Verfahrens zum Testen eines Algorithmus getestet wird und für den Fall, dass der Test eine unzureichende Funktionsweise des Algorithmus ergibt, der Algorithmus in vorgegebener Weise angepasst wird, und unter Nutzung des Algorithmus eine Steuerung der Einrichtung erfolgt.

Bei dem System kann es sich beispielswiese um ein solches handeln, welches zur autonomen Fahrzeugsteuerung oder für eine insbesondere fortgeschrittene Fahrassistenz in Fahrzeugen, etwa PKWs zum Einsatz kommt.

Wird auf Basis eines Algorithmus, welcher unter Verwendung wenigstens eines auf die erfindungsgemäße Weise erzeugten Testdatensatzes, insbesondere unter Durchführung des erfindungsgemäßen Verfahrens zum Testen eines Algorithmus überprüft und bei Bedarf angepasst wurde, eine Einrichtung, etwa ein Fahrzeug oder ein Roboter, gesteuert, kann die Steuerung besonders zuverlässig erfolgen und die Sicherheit der automatisierten Steuerung deutlich erhöht werden.

Das Verfahren zum Betreiben eines Systems zur automatisierten, insbesondere bild- und/oder sensorabhängigen Steuerung einer Einrichtung zeichnet sich in bevorzugter Ausführungsform dadurch aus, dass das System wenigstens eine Bilderfassungseinrichtung umfasst und mittels der wenigstens einen Bilderfassungseinrichtung des Systems eine Sequenz von Bildern erfasst wird, den Bildern der Sequenz Handlungsbereiche zugeordnet werden, und die Bildsequenz mit den zugeordneten Handlungsbereichen als Lerndatensatz zum Anlernen der künstlichen Intelligenz, insbesondere in Schritt 2.1 bereitgestellt werden. Alternativ oder zusätzlich kann vorgesehen sein dass das System wenigstens eine Sensoreinrichtung umfasst und mittels der wenigstens einen Sensoreinrichtung des Systems Sensordaten erfasst werden, den Sensordaten Handlungsbereiche zugeordnet werden, und die Sensordaten mit den zugeordneten Handlungsbereichen als Lerndatensatz zum Anlernen der künstlichen Intelligenz, insbesondere in Schritt 2.1 bereitgestellt werden. Bei Schritt 2.1 handelt es sich insbesondere um einen ersten Schritt des erfindungsgemäßen Verfahrens zur Erzeugung eines Testdatensatzes, welches in Schritt 9.2 des erfindungsgemäßen Verfahrens zum Testen eines Algorithmus durchgeführt wird, um einen Testdatensatz zu erhalten.

Weiterer Gegenstand der Erfindung ist die Verwendung einer künstlichen Intelligenz, die insbesondere generative adversariale Netze umfasst oder durch solche gegeben ist, zur Erzeugung wenigstens eines Testdatensatzes für einen Algorithmus, der als Input Bilddaten erhält und als Output von den Bilddaten abhängige Handlungsbereiche, die insbesondere zulässige Steuerparameter repräsentieren, ausgibt, und/oder der als Input Sensordaten erhält und als Output von den Sensordaten abhängige Handlungsbereiche, die insbesondere zulässige Steuerparameter repräsentieren, ausgibt. Es sei angemerkt, dass sämtliche Merkmale, die vorstehend für die künstliche Intelligenz und/oder den wenigstens einen Testdatensatz beschrieben wurden, jeweils einzeln oder in Kombination auch im Rahmen der erfindungsgemäßen Verwendung verwirklicht sein können.

Noch ein weiterer Gegenstand der vorliegenden Erfindung ist eine Vorrichtung, die zur Durchführung des erfindungsgemäßen Verfahrens zur Erzeugung eines Testdatensatzes für einen Algorithmus oder zur Durchführung des erfindungsgemäßen Verfahrens zum Testen eines Algorithmus oder zur Durchführung des erfindungsgemäßen Verfahrens zum Betreiben eines Systems zur automatisierten, insbesondere bildabhängigen Steuerung einer Einrichtung ausgebildet und eingerichtet ist.

Die erfindungsgemäße Vorrichtung umfasst bevorzugt wenigstens einen Prozessor und insbesondere einen Datenspeicher. Sie kann beispielsweise einen Computer, insbesondere PC umfassen oder als solcher ausgebildet sein.

Eine erfindungsgemäße Vorrichtung kann beispielsweise auch Teil eines Steuerungssystems für eine Einrichtung, insbesondere ein Fahrzeug oder einen Roboter, bilden.

Ebenfalls Gegenstand der Erfindung ist ein Computerprogrammprodukt umfassend Programmcode-Mittel zur Durchführung des erfindungsgemäßen Verfahrens zur Erzeugung eines Testdatensatzes für einen Algorithmus bzw. zur Durchführung des erfindungsgemäßen Verfahrens zum Testen eines Algorithmus bzw. zur Durchführung des erfindungsgemäßen Verfahrens zum Betreiben eines Systems zur automatisierten, bildabhängigen Steuerung einer Einrichtung.

Gegenstand der Erfindung ist auch die Erzeugung eines Datenträgers, auf dem wenigstens ein Testdatensatz gespeichert ist, der unter Durchführung des erfindungsgemäßen Verfahrens zur Erzeugung wenigstens eines Testdatensatzes gespeichert ist.

Schließlich ist ein Gegenstand der vorliegenden Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Erzeugung eines Testdatensatzes für einen Algorithmus bzw. die Schritte des erfindungsgemäßen Verfahrens zum Testen eines Algorithmus bzw. die Schritte des erfindungsgemäßen Verfahrens zum Betreiben eines Systems zur automatisierten, bildabhängigen Steuerung einer Einrichtung durchzuführen.

Ein computerlesbares Medium kann beispielsweise in Form eines Datenträgers, etwa einer CD-ROM, einer DVD oder eines Flash bzw. USB Speichers vorliegen. Es sei angemerkt, dass unter einem computerlesbaren Medium nicht nur ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile des erfindungsgemäßen Verfahrens werden anhand der nachfolgenden beispielhaften Beschreibung unter Bezugnahme auf die beiliegende Zeichnung deutlich.

### Darin ist

- FIG 1: eine rein schematische Darstellung zum Ablauf eines Ausführungsbeispiels des erfindungsgemäßen Verfahrens zum Testen eines Algorithmus,
- FIG 2: ein Blockbild zur rein schematischen Veranschaulichung der Konditionierung der künstlichen Intelligenz,
- FIG 3: eine rein schematische Darstellung eines Lerndatensatzes mit einer Bildsequenz und zugehörigen Handlungsbereichen in Form von zugehörigen Fahrtrajektorien und Korridoren,
- FIG 4: ein Blockbild zur rein schematischen Veranschaulichung der Erzeugung eines Testdatensatzes und des Testen eines Algorithmus, und
- FIG 5: eine rein schematische Darstellung dreier Testdatensatzes mit jeweils einer Bildsequenz und zugehörigen Handlungsbereichen in Form von zugehörigen Fahrtrajektorien und Korridoren.

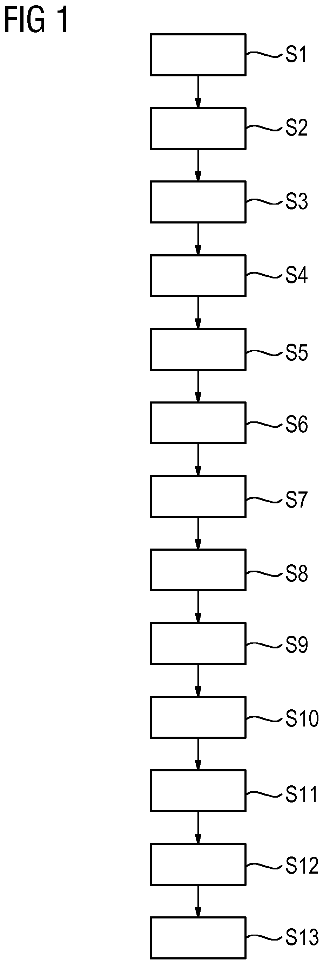

Die FIG 1 zeigt eine rein schematische Darstellung zum Ablauf eines Ausführungsbeispiels des erfindungsgemäßen Verfahrens zum Testen eines Algorithmus 1. In der FIG sind die im Rahmen des Ausführungsbeispiels durchgeführten Schritte dabei in der Art eines Blockbildes bzw. Plusdiagramms dargestellt.

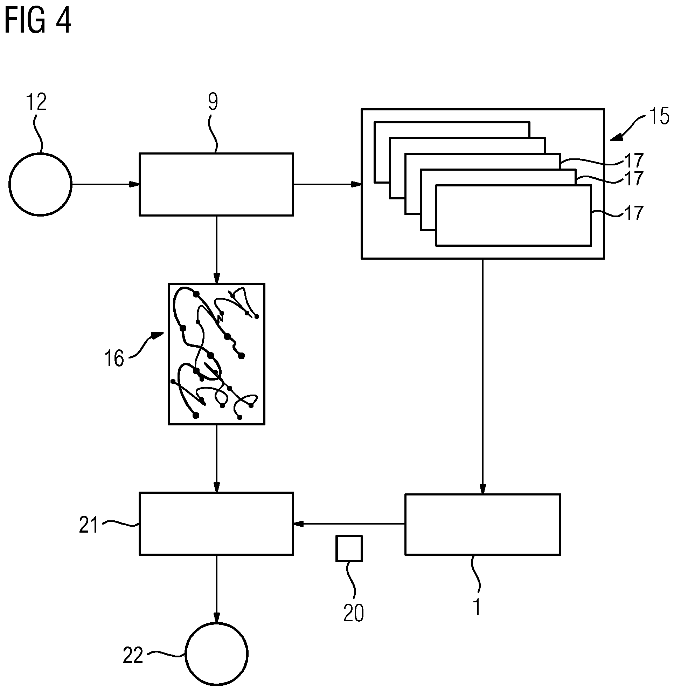

Im Rahmen des dargestellten Ausführungsbeispiels wird in einem ersten Schritt S1 ein zu testender Algorithmus 1, bei dem es sich vorliegend um einen Steueralgorithmus 1 für die autonome Fahrzeugführung handelt, bereitgestellt. Der Algorithmus 1 für die autonome Fahrzeugführung, welcher nur in FIG 4 und darin rein schematisch durch ein Blockelement dargestellt ist, ist derart ausgestaltet, dass er in an sich bekannter Weise als Input eine Bildsequenz, konkret ein Video der Fahrzeugumgebung erhält und als Output von der Bildersequenz abhängige Handlungsbereiche ausgibt, die in Abhängigkeit des jeweiligen Bildes der Sequenz zulässige Steuerparameter für das Fahrzeug repräsentieren.

Im Anschluss an die Bereitstellung des Algorithmus 1 in Schritt S1 wird ein Ausführungsbeispiel eines erfindungsgemäßen Verfahrens zur Erzeugung eines Testdatensatzes durchgeführt.

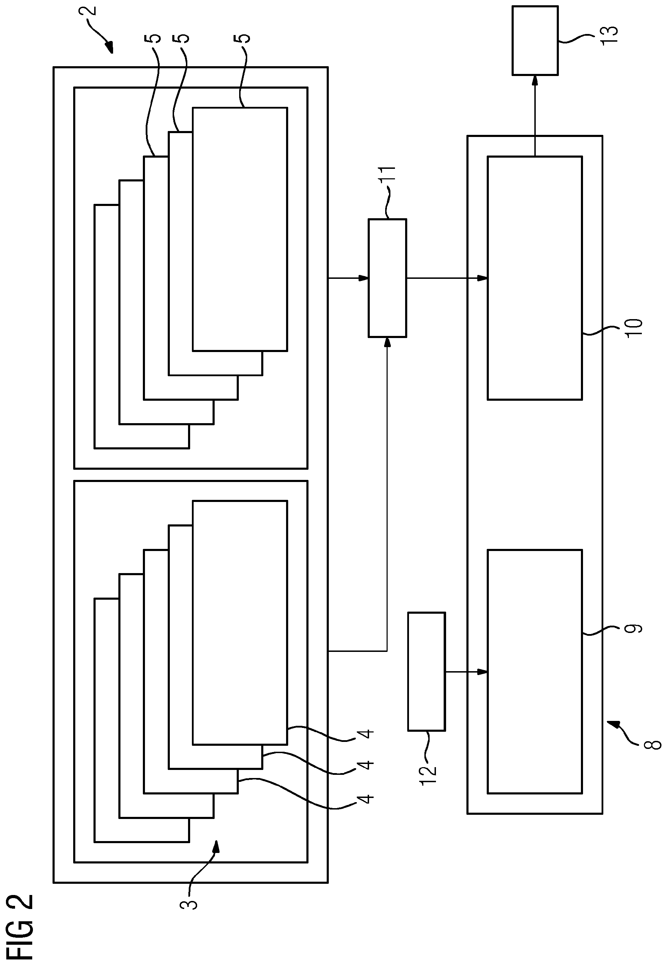

Dabei wird konkret in Schritt S2 ein Lerndatensatz 2 bereitgestellt, welcher reale Bilddaten in Form einer realen Bildsequenz 3 mit einer Mehrzahl von Bildern 4 umfasst, die im zeitlichen Zusammenhang stehen und vorliegend mehrere Aufnahmen einer Fahrsituation zeigen. Die reale Bildsequenz 3 wurde mittels einer in FIG 2 nicht gezeigten Bilderfassungseinrichtung, konkret einer in einem ebenfalls nicht gezeigten Fahrzeug vorgesehenen Kamera aufgezeichnet, während das Fahrzeug eine Fahrt absolvierte.

Der Lerndatensatz 2 umfasst neben der Bildsequenz 3 zu dieser gehörige Handlungsbereiche 5, die bei dem vorliegenden Ausführungsbeispiel durch zu den jeweiligen Bildern 4 der Bildsequenz 3 korrespondierende Fahrtrajektorien 6 sowie zugehörige Sollkorridore 7 für die Fahrtrajektorien 6 gegeben sind.

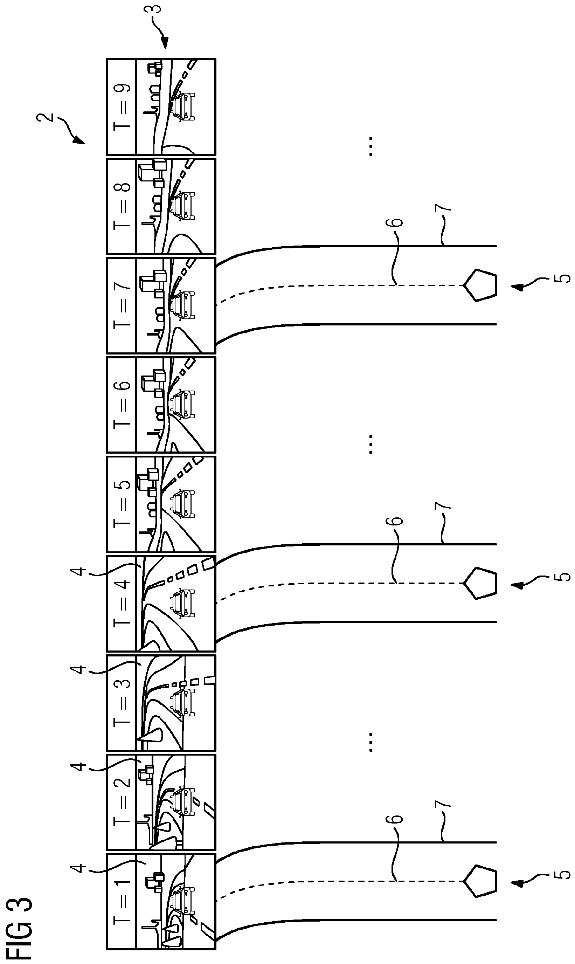

In der FIG 2 ist der Lerndatensatz 2 rein schematisch mit Blockelementen für die Bilder 4 und Handlungsbereiche 5 dargestellt und die FIG 3 enthält eine ebenfalls schematische Darstellung des Lerndatensatzes 2, in der beispielhaft neun Bilder 4 sowie drei jeweils zugehörige Fahrtrajektorien 6 und Sollkorridore 7, welche die zugehörigen Handlungsbereiche 5 bilden, gezeigt sind. Es sei angemerkt, dass die Sollkorridore 7 Sollbereiche für die Fahrtrajektorien 6 definieren. Die neun Bilder 4 repräsentieren neun aufeinanderfolgende Zeitpunkte, was in der FIG 3 mit der Angabe T=1 ... 9 über dem jeweiligen Bild 4 angedeutet ist.

In einem Schritt S3 wird eine künstliche Intelligenz 8 bereitgestellt, die bei dem dargestellten Ausführungsbeispiel durch lange Kurzzeitgedächtnis generative adversariale Netze (LSTM-GANs) gegeben ist. Die LSTM-GANs 8 liegen bei dem dargestellten Ausführungsbeispiel in Form eines langen Kurzzeitgedächtnis generativen Netzes 9 sowie eines langen Kurzzeitgedächtnis diskriminierenden Netzes 10 vor, was in der FIG 2 wiederum rein schematisch durch Blockelemente skizziert ist. Die Architektur der beiden Netze 9, 10 ist wie in dem Aufsatz "Generative Adversarial Nets" (GANs), ArXiv: 1406.2661 [statML]661v1, 10. Januar 2014 von Goodfellow et al. beschrieben. In Abweichung zu dazu sind die Netze 9, 10 vorliegend nicht als klassische "convolutional"-Netze ausgestaltet, wie gemäß diesem Aufsatz, sondern als "convolutional" LSTM-Netze 9, 10, also langes Kurzzeitgedächtnis_"convolutional" Netze 9, 10, wie sie in dem Aufsatz "Long Short Term Memory" (LSTM) von Sepp Hochreiter und Jürgen Schmidhuber, Neural Computation 9 (8): 1735 - 1780, 1997 beschrieben sind.

In einem Schritt S4 wird die künstliche Intelligenz 8 unter Verwendung des bereitgestellten Lerndatensatzes 2 konditioniert. Dabei werden bei dem hier beschriebenen Beispiel, wie in der FIG 2 rein schematisch durch Pfeile angedeutet, die Bildsequenz 3 und Handlungsbereiche 5 zusammengefügt, was symbolisch über ein Blockelement mit dem Bezugszeichen 11 skizziert ist, und an das LSTM diskriminierende Netz 10 übergeben. Das LSTM generierende Netz 9 wird über einen Anregungs-Input 12 angeregt und seine Ausgaben also Generate werden ebenfalls an das LSTM diskriminierende System 10 übergeben, welches jeweils eine Entscheidung korrekt/nicht korrekt trifft, was durch das mit dem Bezugszeichen 13 versehene Blockbildelement angedeutet ist. Der Anregungs-Input 12 kann durch ein Zufallssignal gegeben sein. Auch ist es möglich, dass das LSTM generierende Netz 9 bei Null anfängt.

Bei der korrekt/nicht korrekt Entscheidung 13 handelt sich insbesondere um die Entscheidung, ob ein von dem generativen Netz 9 ausgegebenes Generat mit Daten des dem diskriminierenden Netz 10 übergebenen Lerndatensatzes übereinstimmt bzw. von diesen zu unterscheiden ist oder nicht. Die Methoden der Netze 9, 10 werden insbesondere verbessert, bis die vom generativen Netz 9 erzeugten Generate möglichst nicht mehr von den Daten gemäß dem Lerndatensatz 2 zu unterscheiden sind. Im Zusammenhang mit der Anlernung von GANs sei auch auf die Einleitung des Aufsatzes "Generative Adversarial Nets" (GANs) von Ian Goodfellow et al., ArXiv: 1406.2661 [statML]661v1, vom 10. Januar 2014, verwiesen.

Im Anschluss an die Konditionierung wird in einem Schritt S5 das generative Netz 9 der konditionierten künstlichen Intelligenz 8 in dem dargestellten Ausführungsbeispiel wiederum mittels eines Zufallssignals (engl.: random signal) 12 angeregt. Dies ist in der FIG 4 schematisch angedeutet.

Durch ein Zufallssignal 12 werden neue Szenarien erzeugt als Antwort einer Instanz. Dafür sind je nach antrainiertem Aufbau verschiedene Dimensionen möglich. Dies kann wie Rauschen im Fernsehen betrachtet werden.

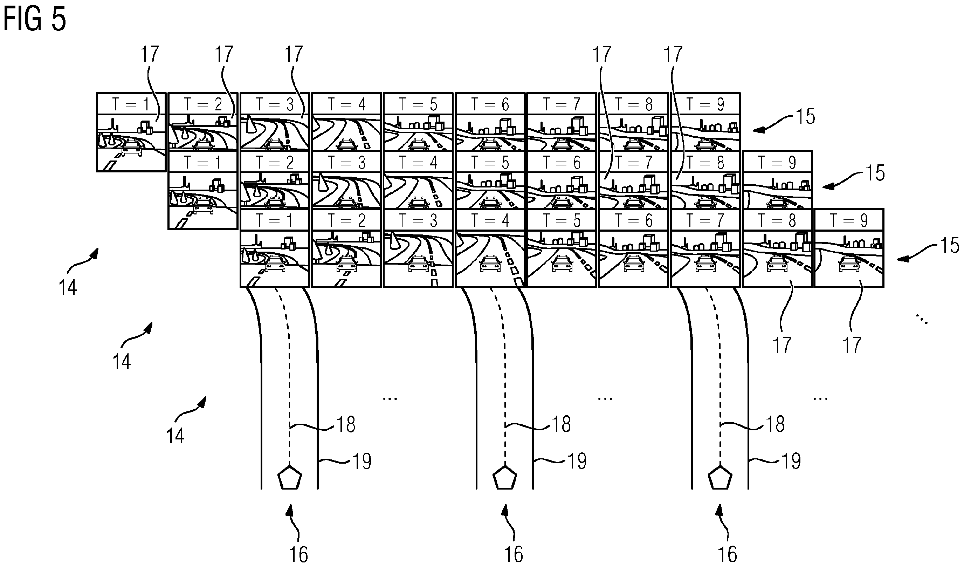

Das angeregte LSTM generative Netz 9 erzeugt wenigstens einen Testdatensatz 14, der eine neue Bildsequenz 15 sowie zu der neuen Bildsequenz 15 gehörige Handlungsbereiche 16 umfasst (Schritt S6). Der unter Verwendung des konditionierten LSTM generativen Netzes 9 erhaltene wenigstens eine Testdatensatz 14 umfasst bei dem beschriebenen Ausführungsbeispiel in Analogie zu dem Lerndatensatz 2 eine Bildsequenz 15 jedoch mit einer Mehrzahl von synthetisch generierten Bildern 17, und die für jedes Bild 17 der Sequenz 15 vorhandenen Handlungsbereiche 16 umfassen ebenfalls in Analogie zu dem Lerndatensatz 2 jeweils eine zugehörige Fahrtrajektorie 18 sowie einen zugehörigen Sollkorridor 19. In der FIG 5 ist dies erneut rein schematisch und beispielshaft für insgesamt drei generierte Testdatensätze 14 veranschaulicht.

In einem Schritt S7 wird wenigstens ein auf die vorbeschriebene Weise erhaltener Testdatensatz 14 bereitgestellt und in einem Schritt S8 wird die Bildsequenz 15 dem zu testenden Algorithmus 1 als Input zugeführt, was in der FIG 4 rein schematisch durch einen entsprechenden von der Bildsequenz 15 zu dem schematisch als Blockelement dargestellten Algorithmus 1 führenden Pfeil angedeutet ist.

In einem Schritt S9 wird der Algorithmus 1 ausgeführt und gibt als Output Handlungsbereiche 20 aus.

In einem Schritt S10 werden die von dem Algorithmus 1 als Output ausgegebenen Handlungsbereiche 20 mit den Handlungsbereichen 16 desmittels des generativen Netzes 9 erzeugten Testdatensatzes 14 verglichen. Der Vergleich ist in der FIG durch ein mit der Bezugsziffer 21 versehenes Blockelement schematisch angedeutet.

In einem Schritt S 11 wird aus dem Ergebnis des Vergleichs auf eine Qualität bzw. Funktionalität des getesteten Algorithmus 1 geschlossen.

Für den Fall, dass auf Basis des Ergebnis des Vergleichs auf eine ausreichende Qualität bzw. Funktionalität des zu testenden Algorithmus 1 geschlossen werden kann, können die Handlungsbereiche 20 als korrekte Handlungsbereiche 22 ausgegeben werden, was in der FIG 4 erneut rein schematisch durch ein Blockbildelement angedeutet ist (Schritt S12).

Auf Basis der korrekten Handlungsbereiche 22 kann dann ein Fahrzeug besonders zuverlässig gesteuert werden (Schritt S13) .

Sind mehrere Testdatensätze 14 erzeugt worden, können die Bildsequenzen 15 von allen Testdatensätzen 14 dem zu testenden Algorithmus 1 zugeführt werden, und die von diesem in Reaktion darauf ausgegebenen Handlungsbereiche 20 können mit den zu der jeweiligen Bildsequenz 15 gehörigen Handlungsbereichen 16, also Fahrtrajektorien 18 und zugehörigen Sollkorridoren 19, des jeweiligen Testdatensatzes 14 verglichen und ein Rückschluss auf die Qualität bzw. Funktionalität des Algorithmus 1 gezogen werden. Wird eine Mehrzahl von Testdatensätzen 14 erzeugt und verwendet, kann der Algorithmus 1 besonders umfassend geprüft werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Erzeugung wenigstens eines Testdatensatzes (14) für einen Algorithmus (1), der als Input Bilddaten (17) erhält und als Output von den Bilddaten abhängige Handlungsbereiche (16), die insbesondere zulässige Steuerparameter repräsentieren, ausgibt, und/oder der als Input Sensordaten erhält und als Output von den Sensordaten abhängige Handlungsbereiche, die insbesondere zulässige Steuerparameter repräsentieren, ausgibt, umfassend folgende Schritte:
1.1 Eine angelernte künstliche Intelligenz (8), die insbesondere generative adversariale Netze (9, 10) umfasst oder durch solche gegeben ist, wird bereitgestellt,
1.2 die künstliche Intelligenz (8) wird insbesondere unter Verwendung eines Zufallssignals (11) und/oder unter Verwendung einer quasi Linearitätseigenschaft für visuelle Konzepte angeregt, und
1.3 die angeregte künstliche Intelligenz (8) erzeugt wenigstens einen Testdatensatz (14), der Bilddaten (15) und zu den Bilddaten (15) gehörige Handlungsbereiche (16) und/oder Sensordaten und zu den Sensordaten gehörige Handlungsbereiche umfasst.

2. Verfahren nach Anspruch 1, **dadurch gekennzeichnet, dass** zum Erhalt der in Schritt 1.1 bereitgestellten angelernten künstlichen Intelligenz folgende Schritte durchgeführt werden:
2.1 Ein Lerndatensatz (2), welcher reale, mittels wenigstens einer Bilderfassungseinrichtung aufgezeichnete Bilddaten (3), und zu den realen Bilddaten (3) gehörige Handlungsbereiche (5) und/oder reale, mittels wenigstens einer Sensoreinrichtung aufgezeichnete Sensordaten, und zu den realen Sensordaten gehörige Handlungsbereiche umfasst, wird bereitgestellt,
2.2 eine künstliche Intelligenz, die insbesondere generative adversariale Netze umfasst oder durch solche gegeben ist, wird bereitgestellt, und
2.3 die künstliche Intelligenz (8) wird unter Verwendung des bereitgestellten Lerndatensatzes (2) konditioniert.

3. Verfahren nach Anspruch 2, **dadurch gekennzeichnet, dass** in Schritt 2.1 ein Lerndatensatz (2), welcher eine reale Bildsequenz (3), die mittels wenigstens einer Bilderfassungseinrichtung aufgezeichnet wurde, und zu den Bildern (4) der Sequenz (3) gehörige Handlungsbereiche (5), die insbesondere zulässige Steuerparameter für ein System zur automatisierten, bildgestützten Steuerung einer Einrichtung repräsentieren, bereitgestellt wird, und in Schritt 1.3 die angeregte künstliche Intelligenz (8) wenigstens einen Testdatensatz (14) erzeugt, der eine neue Bildsequenz (15) und zu der neuen Bildsequenz (15) gehörigen Handlungsbereiche (16) umfasst, und/oder dass in Schritt 2.1 ein Lerndatensatz (2) mit einer realen Bildsequenz (3) bereitgestellt wird, und die Handlungsbereiche (5) des Lerndatensatzes (2) für jedes Bild (4) der Bildsequenz (3) wenigstens einen, insbesondere mehrere Steuerparameter oder diese repräsentierende Werte und für jeden wenigstens einen Steuerparameter oder diesen repräsentierenden Wert einen zugehörigen Sollbereich umfassen.

4. Verfahren nach Anspruch 2 oder 3, **dadurch gekennzeichnet, dass** wenigstens ein Testdatensatz (15) für einen Algorithmus (1) eines fortgeschrittenen Fahrerassistenzsystems oder für ein System zur autonomen Fahrzeugführung erzeugt wird, und der bereitgestellte Lerndatensatz (2) eine Bildsequenz (3) umfasst, die Bilder von Fahrsituationen umfasst, und/oder die für jedes Bild (4) als zugehörigen Handlungsbereich (5) eine Fahrtrajektorie (6) und insbesondere einen zu der jeweiligen Fahrtrajektorie (6) gehörigen Sollkorridor (7), der einen Sollbereich um die Fahrtrajektorie (6) definiert, umfasst.

5. Verfahren nach einem der vorhergehenden Ansprüche, **dadurch gekennzeichnet, dass** wenigstens ein Testdatensatz (14) für einen Algorithmus (1), der als Input eine Bildsequenz (17) erhält und als Output von der Bildsequenz (17) abhängige Handlungsbereiche (16) ausgibt, insbesondere für einen Algorithmus (1) eines Systems zur autonomen Fahrzeugführung oder eines bevorzugt fortgeschrittenen Fahrerassistenzsystems, erzeugt wird.

6. Verfahren nach einem der vorhergehenden Ansprüche, **dadurch gekennzeichnet, dass** in Schritt 1.3 wenigstens ein Testdatensatz (12) erzeugt wird, der eine Bildsequenz (15) umfasst, die Bilder (17) von Fahrsituationen umfasst, und/oder die für jedes Bild (17) als zugehörigen Handlungsbereich (16) eine Fahrtrajektorie (18) und insbesondere einen zu der jeweiligen Fahrtrajektorie (18) gehörigen Sollkorridor (19), der einen Sollbereich um die Fahrtrajektorie (18) definiert, umfasst.

7. Verfahren nach einem der vorhergehenden Ansprüche, **dadurch gekennzeichnet, dass** in Schritt 1.1 eine künstliche Intelligenz (8) bereitgestellt wird, die lange Kurzzeitgedächtnis Netze (9, 10) umfasst oder durch solche gegeben ist.

8. Verfahren nach einem der vorhergehenden Ansprüche, **dadurch gekennzeichnet, dass** die in Schritt 1.1 eine künstliche Intelligenz (8) bereitgestellt wird, die wenigstens ein generatives Netz (9) und/oder wenigstens ein diskriminierendes Netz (10) umfasst oder durch solche gegeben ist, und insbesondere in Schritt 1.2 wenigstens ein generatives Netz (9) der künstlichen Intelligenz (8) angeregt wird und in Schritt 1.3 wenigstens ein angeregtes generatives Netz (9) der künstlichen Intelligenz (8) einen Testdatensatz (14) ausgibt.

9. Verfahren zum Testen eines Algorithmus (1), umfassend die Schritte:
9.1 Ein zu testender Algorithmus (1), der als Input Bilddaten (15) erhält und als Output von den Bilddaten (15) abhängige Handlungsbereiche (20) ausgibt und/oder der als Input Sensordaten erhält und als Output von den Sensordaten abhängige Handlungsbereiche ausgibt, insbesondere ein Algorithmus (1) eines fortgeschrittenen Fahrerassistenzsystems oder für ein System zur autonomen Fahrzeugführung, wird bereitgestellt,
9.2 das Verfahren nach einem der vorherigen Ansprüche wird durchgeführt, um wenigstens einen Testdatensatz (14) mit Bilddaten (15) und zu den Bilddaten (15) gehörigen Handlungsbereichen (16) und/oder mit Sensordaten und zu den Sensordaten gehörigen Handlungsbereichen zu erhalten, 9.3 der wenigstens eine Testdatensatz (14) wird bereitgestellt,
9.4 die Bilddaten (15) und/oder die Sensordaten des wenigstens einen Testdatensatzes (14) werden dem zu testenden Algorithmus (1) als Input zugeführt,
9.5 der Algorithmus (1) wird ausgeführt und gibt als Output Handlungsbereiche (20) aus,
9.6 die von dem Algorithmus als Output ausgegebenen Handlungsbereiche (20) werden mit den Handlungsbereichen (16) des wenigstens einen Testdatensatzes (14) verglichen,
9.7 aus dem Ergebnis des Vergleichs (21) wird auf eine Qualität des getesteten Algorithmus (1) geschlossen.

10. Verfahren nach Anspruch 9, **dadurch gekennzeichnet, dass** im Anschluss an die Durchführung der Schritte 9.1 bis 9.7 die Schritte 1.2 und 1.3 des Verfahrens zur Erzeugung wenigstens eines Testdatensatzes (14) nach einem der Ansprüche 1 bis 8 erneut durchgeführt werden, um wenigstens einen weiteren Testdatensatz (14) zu erzeugen, der von dem zuvor erzeugten Testdatensatz (14) verschieden ist, und der wenigstens eine weitere Testdatensatz (14) bereitgestellt und die Schritte 9.4 bis 9.7 wiederholt werden, insbesondere, um weitere Aspekte des Algorithmus (1) zu testen.

11. Verfahren zum Betreiben eines Systems zur automatisierten, insbesondere bild- und/oder sensorabhängigen Steuerung einer Einrichtung, insbesondere eines Fahrzeugs oder Roboters, wobei das System wenigstens eine Bilderfassungseinrichtung, insbesondere Kamera, und/oder wenigstens eine Sensoreinrichtung, sowie eine Auswerte- und Steuereinheit und Mittel zur Steuerung der Einrichtung umfasst, wobei in der Steuer- und Auswerteeinheit ein Algorithmus (1) abgelegt oder abzulegen ist, der als Input Bilddaten (17) erhält und als Output von den Bilddaten abhängige Handlungsbereiche (16), die insbesondere zulässige Steuerparameter repräsentieren, ausgibt, oder der als Input Sensordaten erhält und als Output von den Sensordaten abhängige Handlungsbereiche, die insbesondere zulässige Steuerparameter repräsentieren, ausgibt, bei dem der Algorithmus (1) unter Durchführung des Verfahrens nach einem der Ansprüche 9 oder 10 getestet wird und für den Fall, dass der Test eine unzureichende Funktionsweise des Algorithmus (1) ergibt, der Algorithmus (1) in vorgegebener Weise angepasst wird, und unter Nutzung des Algorithmus (1) eine Steuerung der Einrichtung erfolgt.

12. Verfahren nach Anspruch 11, **dadurch gekennzeichnet, dass** das System wenigstens eine Bilderfassungseinrichtung umfasst und mittels der wenigstens einen Bilderfassungseinrichtung des Systems eine Sequenz (3) von Bildern (4) erfasst wird, den Bildern (4) der Sequenz (3) Handlungsbereiche (5) zugeordnet werden, und die Bildsequenz (3) mit den zugeordneten Handlungsbereichen (5) als Lerndatensatz (2) zum Anlernen der künstlichen Intelligenz (8) bereitgestellt werden, und/oder das System wenigstens eine Sensoreinrichtung umfasst und mittels der wenigstens einen Sensoreinrichtung des Systems Sensordaten erfasst wird, den Sensordaten Handlungsbereiche zugeordnet werden, und die Sensordaten mit den zugeordneten Handlungsbereichen als Lerndatensatz zum Anlernen der künstlichen Intelligenz (8) bereitgestellt werden.

13. Verwendung einer künstlichen Intelligenz (8), die insbesondere generative adversariale Netze (9, 10) umfasst oder durch solche gegeben ist, zur Erzeugung wenigstens eines Testdatensatzes für einen Algorithmus (1), der als Input Bilddaten (17) erhält und als Output von den Bilddaten abhängige Handlungsbereiche (16), die insbesondere zulässige Steuerparameter repräsentieren, ausgibt, und/oder der als Input Sensordaten erhält und als Output von den Sensordaten abhängige Handlungsbereiche, die insbesondere zulässige Steuerparameter repräsentieren, ausgibt.

14. Erzeugung eines Datenträgers, auf dem wenigstens ein Testdatensatz gespeichert ist, der unter Durchführung des Verfahrens nach einem der Ansprüche 1 bis 8 erhalten wurde.

15. Vorrichtung, die zur Durchführung des Verfahrens nach einem der Ansprüche 1 bis 8 oder nach einem der Ansprüche 9 bis 10 oder nach einem der Ansprüche 11 bis 12 ausgebildet und eingerichtet ist.

16. Computerprogrammprodukt umfassend Programmcode-Mittel zur Durchführung des Verfahrens einem der Ansprüche 1 bis 8 oder nach einem der Ansprüche 9 bis 10 oder nach einem der Ansprüche 11 bis 12.

17. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 8 oder nach einem der Ansprüche 9 bis 10 oder nach einem der Ansprüche 11 bis 12 durchzuführen.
